# FASCICULE DE BREVET EUROPEEN

(11) **EP 2 109 755 B1**
(45) Date de publication et mention de la délivrance du brevet: **27.10.2010**
(21) Numéro de dépôt: 07847422.8
(22) Date de dépôt: 27.11.2007
(51) Int. Cl.: G01C 23/00, G01C 5/00, G08G 5/04

(54) **DISPOSITIF D'ASSERVISSEMENT DE REPRESENTATIONS GRAPHIQUES DE L'ENVIRONNEMENT AERIEN**
VORRICHTUNG ZUR STEUERUNG DER GRAPHISCHEN WIEDERGABE DER UMGEBUNG DER LUFT
DEVICE FOR CONTROLLING THE GRAPHICAL REPRESENTATION OF THE AERIAL ENVIRONMENT

(30) Priorité: 28.11.2006 FR 0610398
(43) Date de publication de la demande: 21.10.2009
(73) Titulaire: Thales, 92200 Neuilly Sur Seine (FR)
(72) Inventeur: FILLIATRE, Eric, 33700 Merignac (FR); NETO, Philippe, 33320 Eysines (FR)
(74) Mandataire: Esselin, Sophie
(86) Numéro de dépôt international: PCT/EP2007/062897
(87) Numéro de publication internationale: WO 2008/065119

(56) Documents cités:
- WO-A-98/04883
- US-A1- 2002 113 719
- US-A1- 2004 217 883
- US-A1- 2005 007 270

## Description

La présente invention concerne les dispositifs de représentations graphiques de l'environnement aérien. Elle s'applique, plus particulièrement, aux systèmes de représentations graphiques relatifs à la perception de la situation, appelée « Situation awareness » selon la terminologie anglo-saxonne.

Généralement, les données, issues de ces représentations, sont corrélées à des données cartographiques. Elles peuvent être de type météorologique ou topologique, par exemple. Dans le cadre du dispositif selon l'invention, les représentations graphiques l'environnement aérien sont asservies selon un cycle de référence de calculs du calculateur avionique et superposées à une cartographie du terrain.

Actuellement, dans les aéronefs de types avions ou hélicoptères, civils et militaires, il existe des équipements dédiés aux représentations graphiques de l'environnement lié à l'aéronef, et de l'environnement indépendant de l'aéronef.

Les systèmes de représentation de l'environnement lié à l'aéronef dépendent des données propres à l'aéronef, comme les données systèmes, la trajectoire, les données d'altimétries ou les ressources dudit aéronef. Le pilote est constamment informé de ces données. Ces données sont critiques pour la navigation et sont calculées et rafraîchies à chaque cycle de calculs du calculateur avionique. Elles peuvent, notamment, servir à d'autres applications qui nécessitent des informations propres à l'aéronef en tant que données d'entrées pour effectuer d'autres calculs. Ces données peuvent être typiquement le cap de l'aéronef ou sa position dans l'espace, par exemple.

Pour permettre au pilote une navigation en connaissance de l'environnement afin de minimiser les dangers, les données liées à l'environnement de l'aéronef sont corrélées aux données environnementales indépendantes de l'aéronef. Ces données peuvent être du type topologique ou météorologique, par exemple. Elles peuvent être issues d'une base de données, comme les données de terrain ou capturées, calculées et traitées en temps réel, comme les données météorologiques.

La corrélation de ces données permet, par exemple, pour un cap déterminé et une trajectoire connue, de connaître et de prédire les dangers potentiels liés à la situation de l'aéronef dans son environnement extérieur. La prédiction s'évalue dans un futur proche avec l'hypothèse que le cap et la trajectoire de l'aéronef restent inchangés. Des écrans de visualisation ou des alarmes sont usuellement utilisés afin d'alerter le pilote.

Un des principaux intérêts de telles fonctions est d'évaluer des risques potentiels, notamment, de collisions, de turbulences fortes ou encore de foudre qui induiraient une diminution de la sécurité du vol.

Il existe plusieurs systèmes de représentation de l'environnement lié à l'aéronef, qui dépendent chacun des données propres à une application donnée.

Un exemple de système d'analyse de données environnementales existant est le système WXR, nom commercial donné au produit développé et commercialisé par Rockwell Collins, qui signifie, en français, « Système de Radar Météorologique ». Cet équipement est utilisé dans de nombreux aéronefs. Il est constitué d'une antenne radar, qui balaie en permanence un secteur angulaire situé devant le porteur sur une distance paramétrable. Cet équipement analyse l'atmosphère pour récupérer des données météorologiques et les fournir au pilote.

A partir des données acquises en temps réel, l'équipement WXR est capable de fournir aux autres systèmes du porteur des informations météorologiques digitalisées. Ces informations permettent, alors, dans le cas de systèmes d'affichage situés dans la cabine de pilotage, de faire un rendu du secteur balayé sur un écran. L'équipage obtient les informations météorologiques relativement à la position du porteur.

Par ailleurs, un autre cas d'exemple de tels systèmes, est le système TAWS, dont l'acronyme anglo-saxon signifie « Terrain Awareness Warning System », dont la traduction, en français, est système d'alarmes de prise de conscience du terrain. Le système a été développé et commercialisé par Thales en collaboration avec L-3 Communications, le nom du produit est appelé T2CAS.

Plus généralement, le TAWS est un système qui, par rapport à des données d'altimétrie, issues d'une base de données numériques, génère un affichage graphique et le cas échéant des alarmes sonores sur la base d'un calcul qui prend en compte :
- la position du porteur, ainsi que divers paramètres de vol notamment sa vitesse et son cap ;
- les extrapolations de la trajectoire du porteur pour réaliser des calculs de prédiction ;
- les caractéristiques du porteur en terme de performance, notamment en ce qui concerne les phases de montée d'urgence à performances maximales.

A l'issue de ce calcul, le TAWS restitue à l'équipage graphiquement ou sous forme d'alarmes sonores :
- la tranche d'altitude dans laquelle le porteur se situe relativement au terrain alentour.
- les zones du terrain qui peuvent à brève échéance mettre en danger la sécurité du vol si l'équipage ne modifie pas la trajectoire du porteur
- les zones du terrain qui mettent en danger la sécurité du vol si l'équipage ne modifie pas immédiatement la trajectoire du porteur

Le TAWS est une fonction qui est embarquée sur des calculateurs avioniques temps réel.

Un autre exemple d'application est le système de représentation cartographique de la topologie du terrain. Ce système, au moyen d'une base de données numériques connues, construit une représentation graphique du terrain et de ses attributs, tels que les ombrages, les données vectorielles et les obstacles.

En particulier, dans les aéronefs, la représentation graphique du terrain est asservie pour un cycle de calcul donné par sa position courante du porteur et par rapport à son cap. Plusieurs modes de représentation du terrain et de positionnement du porteur sur le terrain sont disponibles selon les contextes opérationnels.

En ce qui concerne l'harmonisation des graphiques, issus des différentes applications, la structure des données et la discrétisation des informations dépend notamment de chaque application et des protocoles utilisés. Par exemple les applications TAWS et WXR structurent leurs données numériques selon des radiales. Cette structure de données répond au protocole ARINC 453 permettant de fournir, aux moyens de génération d'images, des trames formatées provenant de moyens de calculs.

Par ailleurs, la fonction cartographique utilise un autre mode de structure de données.

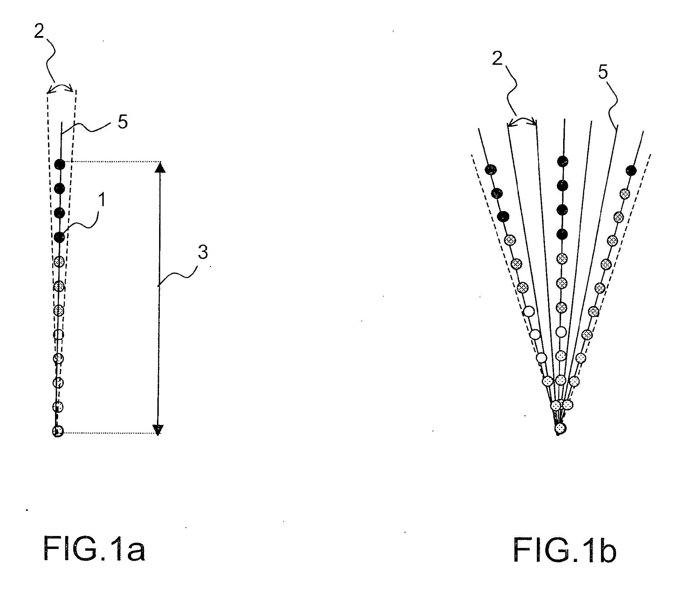

Dans ce cadre, la figure 1a représente la numérisation d'informations collectées, dans l'espace ou à partir d'une base de données, sous forme de radiales. Une radiale 5 est orientée suivant un angle proche du cap de l'aéronef. Dans l'application TAWS, la radiale possède une portée 3 correspondant au point le plus éloigné dans la zone numérisée. Cette radiale comporte un certain nombre de points 1. Chacun des points numérise une information, notamment calculée à partir de l'altitude du point mesuré. Le point représente notamment un danger pour l'aéronef dans un futur proche si le cap ne change pas. Celui-ci possède un code de couleurs qui indique au pilote le danger potentiel dans la direction de la radiale. Les radiales possèdent une ouverture, représentée par un angle 2. A une distance donnée de l'aéronef, le point discrétise le danger dans un périmètre compris dans l'angle 2 et entre le point aval et le point amont du point considéré.

Les représentations réelles des données issues des différentes applications sont en couleurs. Le pilote peut ainsi juger d'une zone dangereuse ou sans risque en fonction du code couleur assigné.

L'application TAWS rafraîchit un ensemble de radiales dans un temps de calcul déterminé et les présente sous forme graphique au pilote. La figure 1b représente un ensemble de radiales numérisant une partie de l'espace situé devant l'aéronef.

Pour un cycle C₀ du calculateur avionique, les ressources étant partagées entre les différentes applications, un certain nombre de radiales peuvent être calculées et affichées. Dans l'exemple de l'application TAWS, à chaque cycle C₀, quatre radiales peuvent être calculées et affichées. Par exemple, on considère qu'une image, représentant les données TAWS, est formée de 400 radiales. Un cycle de calcul, noté C₁, correspondant à 100 cycles temps réel du calculateur avionique, est nécessaire pour considérer que l'image est entièrement rafraîchie à l'écran. A l'issu du cycle C₁, la représentation complète des données du TAWS, est calculée et affichée, en fonction du cap et de la position de l'aéronef. Dans le cycle C₁, la représentation graphique des données du TAWS est réaffichée par parties à chaque cycle C₀, dans l'exemple par groupe de quatre radiales, sur un écran de visualisation, au pilote. Ce réaffichage se réalise avec les informations de cap et de position de l'aéronef correspondantes au premier des 100 cycles C₀ qui composent un cycle C₁.

En cas de changements de cap de l'aéronef, en particulier lors d'un virage, il peut y avoir un dé-synchronisme entre l'orientation de la représentation des données du TAWS et le cap réel nouvellement calculé après un cycle C₀.

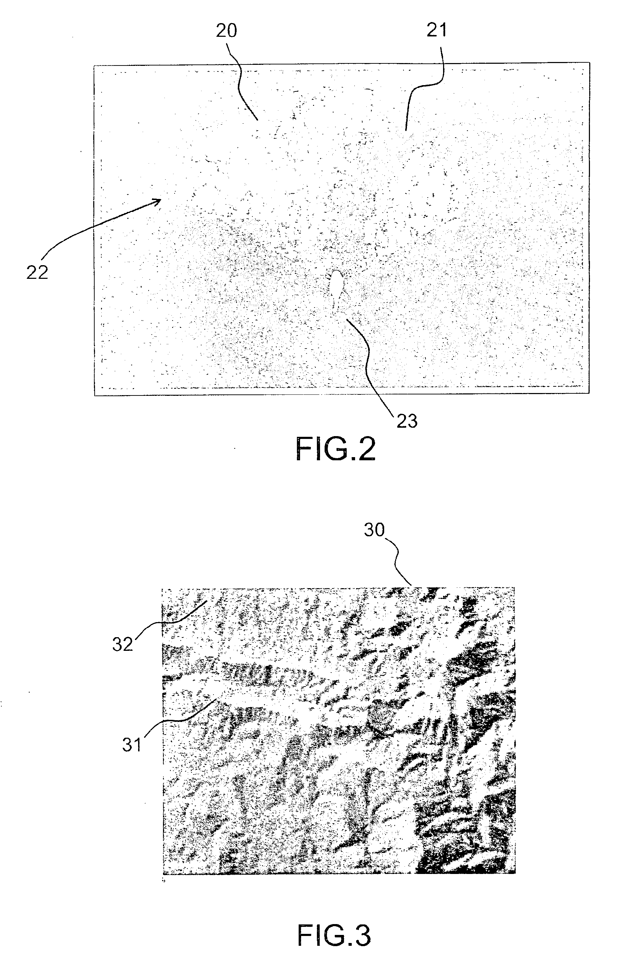

La figure 2 représente un graphique d'un exemple de l'application TAWS. Il représente un secteur angulaire 22 numérisé par des points de chaque radiale. Chaque point représenté comporte une information de couleur relative au danger, ledit danger étant estimé à partir de l'altitude de l'aéronef extrapolée dans un futur proche. Ce secteur angulaire comprend donc des zones de différentes teintes ou couleurs. Cette zone couvre un angle large centré sur le cap de l'aéronef 23. Certaines teintes 20 représentent un danger si l'aéronef se dirige vers cette zone, d'autres teintes 21 signifient qu'aucun danger de collision est visible dans cette direction.

Pendant le cycle C₂, une autre application, telle que la fonction cartographique, est capable de rafraîchir l'intégralité de la carte géo-référencée, à partir d'une base de données embarquée, et d'afficher la représentation sur un écran de visualisation.

Dans l'exemple de l'application fonction cartographique, le cycle C₂ est égal à C₀ Ainsi la carte est calculée et affichée, en fonction du cap et de la position de l'aéronef, à chaque cycle élémentaire C₀.

Dans un cadre d'une autre application, le cycle C₂ pourrait être supérieur à C₀.

La figure 3 représente une cartographie 30 du relief que l'aéronef survole. La zone 31 représente un relief qui pourrait être une montagne ou une colline, la zone 32 représente un espace de bas relief.

Le document US 2002/113719 décrit un dispositif de relevé des données environnementales et des paramètres de navigation dans lequel les données environnementales sont rafraîchies à partir de la base de données terrain et centrées en fonction de la position de l'avion.

L'inconvénient, du dé-synchronisme de fonctionnement des différentes applications, est de fournir au pilote des informations provenant de plusieurs applications dans des bases de temps différentes de rafraîchissement des données.

Actuellement, les cycles de calculs, notamment des systèmes de représentations graphiques des environnements multiples liés ou non à l'aéronef, sont indépendants. Chaque application est dédiée à une fonction donnée et de leur intégration impose autant de ressources graphiques qu'il y a d'applications.

Les inconvénients de ces solutions, telles que développées, sont leur relative indépendance et leur utilisation exclusive qui nécessite par exemple d'intégrer dans la cabine de pilotage autant d'écrans de visualisation que d'applications. Par exemple, chacune des trois applications précitées, l'application cartographie, l'application météorologique, et l'application d'altimétrie, possède des ressources graphiques et un afficheur dédiés.

L'exclusivité des applications impose au pilote soit de changer manuellement de représentation graphique sur un même écran selon l'application, soit de suivre différents écrans pendant la phase de pilotage.

Un autre inconvénient est le rafraîchissement des données de chaque application qui dépend des contraintes de temps réel liées à la charge de calcul de chaque application. Le pilote est ainsi contraint, en connaissance de cause, d'intégrer cette différenciation de rafraîchissement des données selon l'application qu'il consulte. Si l'on considère un cycle de temps de calcul référence du calculateur avionique, chaque application asservit ses propres données, en calcul ou graphiquement, suivant un nombre de cycles qu'il lui est propre. On définit dans ce brevet le cycle élémentaire qui représente le plus petit cycle de calcul temps réel du calculateur avionique permettant le calcul du cap et de la position de l'aéronef et l'affichage de données graphiques liées à l'aéronef, ce cycle est noté par suite C₀.

Un avantage de fonctionnement pour le pilote est de disposer d'un affichage commun des différentes applications lorsque celles-ci présentent des similitudes topologiques ou géographiques. Par exemple, la représentation des données TAWS et la représentation de la fonction cartographique pourrait se superposer. Cette solution offrirait au pilote un confort visuel et une facilité accrue d'aide à la décision en cas de danger. L'application météorologique WXR est également superposable à la fonction cartographique, ainsi que toutes autres applications destinées à représenter des données graphiques sur un afficheur.

Néanmoins, dans le cadre d'une représentation commune des différentes représentations graphiques, il est nécessaire d'harmoniser et donc de synchroniser les rafraîchissements et les asservissements graphiques pour la lisibilité du pilote quant aux informations présentées.

Le dispositif selon l'invention se situe dans le cadre de l'intégration de ces différentes fonctions et de l'harmonisation et de la synchronisation du rafraîchissement des représentations graphiques présenté au pilote indépendamment de la structure et du calcul des données des applications.

Afin d'harmoniser l'intégration des applications pré-citées ou d'autres applications ayant pour vocation d'être représentés graphiquement, il est nécessaire, de considérer un cycle de calcul temps réel référence C₀ du calculateur avionique, tel que défini précédemment, capable de fournir au moins la position de l'aéronef et son cap à d'autres ressources. Ce cycle peut être différent selon les calculateurs avioniques ou les aéronefs. Il s'agit d'une référence de calcul et ne constitue pas une donnée restrictive du dispositif selon l'invention.

Généralement, les informations relatives à l'aéronef, tel que les données systèmes, la trajectoire, les données d'altimétries ou les ressources dudit aéronef sont toutes calculées en un cycle C₂. Pour certaines applications, dans la suite de la description, on considère que les deux cycles C₀ et C₂ sont de valeur égale. C'est le cas de l'application cartographie, qui en un cycle C₀ est capable d'extraire les données de la base numérique de terrain, de générer une image et de l'orienter en fonction du cap et de la position de l'aéronef sur un écran de visualisation.

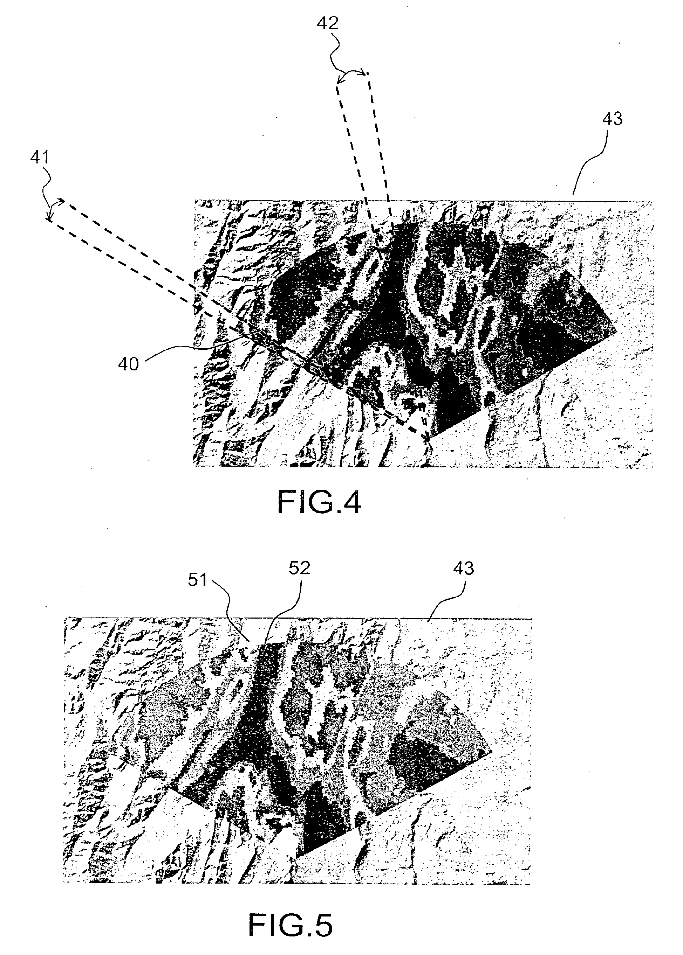

La figure 4 représente l'exemple d'un graphique 43 issu des données d'une application TAWS qui se superpose à une cartographie de l'espace survolé.

La superposition des données de ces deux applications représente un cas de réalisation parmi d'autres. La structure des données de ces deux applications ne restreint pas la portée du dispositif de l'invention.

Les données cartographiques sont issues d'une application comprenant une base de données numériques du terrain. Les données numériques de l'application TAWS sont rafraîchies graphiquement, par groupe de quatre radiales de manière circulaire, de la gauche vers la droite. A chaque cycle C₀, quatre radiales supplémentaires sont rafraîchies et affichées sur un afficheur. Chaque radiale comprend un nombre de points numérisés donnés qui sont calculées. L'ensemble des radiales composant une image entière est rafraîchi au bout d'un cycle C₁, correspondant à 100 cycles C₀.

L'espace angulaire 41 occupé par quatre radiales représente une partie de la représentation graphique générée par l'application TAWS.

Les deux représentations graphiques de chacune des applications sont réaffichées à la fin de leur propre cycle, respectivement C₀ et C₁.

Lorsque l'aéronef change de cap par exemple, c'est à dire qu'il effectue un virage, la superposition graphique produit un effet de cisaillement 40 compte tenu des cycles d'asservissement différents. Seule, la partie des données comprises dans le secteur angulaire 41 est rafraîchie dans un même intervalle de temps que les données cartographiques. Mais la partie des données comprises dans le secteur angulaire 41 ainsi que l'autre partie des données du TAWS ne sont pas ré-orientées selon le nouveau cap et la nouvelle position de l'aéronef, calculés dans un cycle C₀, avant la fin du cycle C₁. Le pilote n'obtient plus une représentation des données TAWS, comprises dans la partie angulaire où elles ne sont pas encore calculées, conforme à la réalité durant un court moment.

Un certain nombre de cycles plus tard, les données comprises dans l'espace angulaire 42, comprenant quatre radiales, sont rafraîchies à leur tour. Le cisaillement, radial, se produisant entre les données rafraîchies sur la partie gauche du dessin et celles qui seront rafraîchies dans les cycles à venir dans la partie droite du dessin.

Malgré le gain d'information sur un même écran, le décalage de superposition graphique introduit un inconfort pour le pilote.

Le rafraîchissement par parties, donc sur plusieurs cycles de calculs, des données du TAWS est indépendant de la cartographie.

De la même manière, la figure 5 représente une même superposition 43 des données issues de l'application TAWS et de l'application cartographie. Un virage de l'aéronef introduit un décalage des graphiques. La zone 52 représente une zone sans danger, correspondant à une altitude élevée de l'aéronef par rapport au sol. Cette zone correspond à la vallée 51 de la cartographie. Il apparaît nettement que ces deux zones ne sont pas superposées dans ce cycle de calcul. On observe un glissement provenant du changement de cap de l'aéronef.

Un but de l'invention est notamment de pallier les inconvénients précités. A cet effet, l'invention a pour objet d'harmoniser les affichages des données issues de différentes applications.

Avantageusement, le dispositif d'asservissement de représentations graphiques de l'environnement aérien pour aéronef, encore appelé situation awareness en terminologie anglo-saxonne, comprend des moyens de visualisation, un calculateur avionique, et
- d'une part ;
   ○ une première ressource de traitement et de stockage de données, lesdites données étant appelées données environnementales ;
   ○ des premiers moyens de génération d'images des données environnementales, lesdites données étant asservies par la première ressource de calcul et rafraîchie, périodiquement, dans, au moins, un premier intervalle de temps (t1) et ;
- d'autre part ;
   ○ une deuxième ressource de calcul fournissant un angle de cap de l'aéronef par rapport au nord et sa position courante géo-référencée, ces données étant asservies, périodiquement, en temps réel dans un deuxième intervalle de temps (t2), tel que le second intervalle de temps (t2) soit inférieur au premier intervalle de temps (t1),

Avantageusement, la représentation d'une partie des données environnementales sur l'écran de visualisation du dispositif est asservie et rafraîchie dans le second intervalle de temps (t2) et positionnée et orientée graphiquement, par les moyens de visualisation, selon le dernier angle courant de la position de l'aéronef calculé et de la dernière position courante géo-référencée.

Avantageusement, le dispositif comprend un ensemble de bases numériques de données représentant des informations topologiques de terrain, appelées données cartographiques, ces données étant asservies par le calculateur à des seconds moyens de génération d'images et rafraîchies, orientées et positionnées sur l'écran de visualisation dans le second intervalle de temps (t2) selon le cap et la position de l'aéronef, de telle manière que les données environnementales soient superposées aux données cartographiques.

Avantageusement, la partie des données environnementales affichées sur l'écran de visualisation est représentée symétriquement de part et d'autre du cap de l'aéronef et a pour origine la position courante de l'aéronef.

Avantageusement, les données environnementales calculées couvrent une première zone géographique et les données environnementales affichées couvrent une seconde zone géographique incluse dans la première zone, la surface de la seconde zone étant suffisamment petite de façon à ce que pendant le premier intervalle de temps (t1), compte tenu des performances maximales de déplacements de l'aéronef, la seconde zone reste toujours incluse dans la première zone.

Avantageusement, les données environnementales sont des données météorologiques, tel que les données provenant du système WXR, dont la terminologie anglo-saxonne est « Weather Radar System ».

Avantageusement, les données environnementales sont des données d'altimétrie, tel que les données provenant du système TAWS, dont la terminologie anglo-saxonne est « Terrain Awareness Warning System ».

Avantageusement, les données environnementales numérisent un secteur angulaire (θ₀) symétrique de part et d'autre du cap de l'aéronef, ledit secteur angulaire ayant une portée constante (L) et point d'origine définie par la position courante de l'aéronef.

Avantageusement, le secteur angulaire est composé d'un nombre de radiales (Nr), ayant chacune une portée (L), une ouverture (θ₁), de centre la position courante de l'aéronef, l'espacement entre deux radiales étant défini par l'angle (θ₁/2).

Avantageusement, les radiales sont calculées par le calculateur, successivement par groupe de quatre, dans le second intervalle de temps (t2), l'ensemble des radiales, formant le secteur angulaire, étant calculé dans le premier intervalle de temps (t1).

Avantageusement, les données environnementales sont transmises selon le protocole ARINC 453, aux moyens de générations d'images.

Avantageusement, le premier intervalle de temps (t1) est égal 2,5 s et le second intervalle de temps (t2) est égal à 25ms.

D'autres caractéristiques et avantages de l'invention apparaîtront à l'aide de la description qui suit faîte en regard des dessins annexés qui représentent :
- la figure 1a et 1b : La discrétisation des données en radiales ;
- la figure 2 : La représentation graphique des données d'une application TAWS;
- la figure 3 : La représentation des données de l'application cartographie ;
- la figure 4 : L'illustration de l'effet de cisaillement, de la représentation graphique, lié à la superposition de données issues de deux applications différentes ;
- la figure 5 : L'illustration de l'effet de glissement de la représentation graphique lié à la superposition de données ;
- la figure 6: Le principe de l'extraction des données asservies graphiquement dans l'application TAWS par le cap et la position de l'aéronef ;
- la figure 7 : L'asservissement d'un graphique par la position et le cap de l'aéronef ;
- la figure 8 : L'élimination de l'effet de glissement entre les données cartographiques et des données du TAWS ;
- la figure 9 : Un exemple d'un asservissement graphique inadapté ;
- la figure 10 et 11 : Un exemple d'extraction de données selon une forme géométrique particulière.

Le dispositif selon l'invention introduit une notion de cohérence de rafraîchissement graphique sur un cycle C₀ pour l'intégralité des données issues d'une application, telle que le TAWS.

Indépendant des données de l'application cartographique, Il y a une harmonisation du rafraîchissement graphique des données de l'application TAWS pendant un cycle C₀ en fonction du cap et de la position de l'aéronef.

Ainsi, le dispositif selon l'invention dispose au pilote d'un affichage orienté selon le cap et la position de l'aéronef à chaque cycle C₀ indépendamment du cycle de calcul des données elles-même.

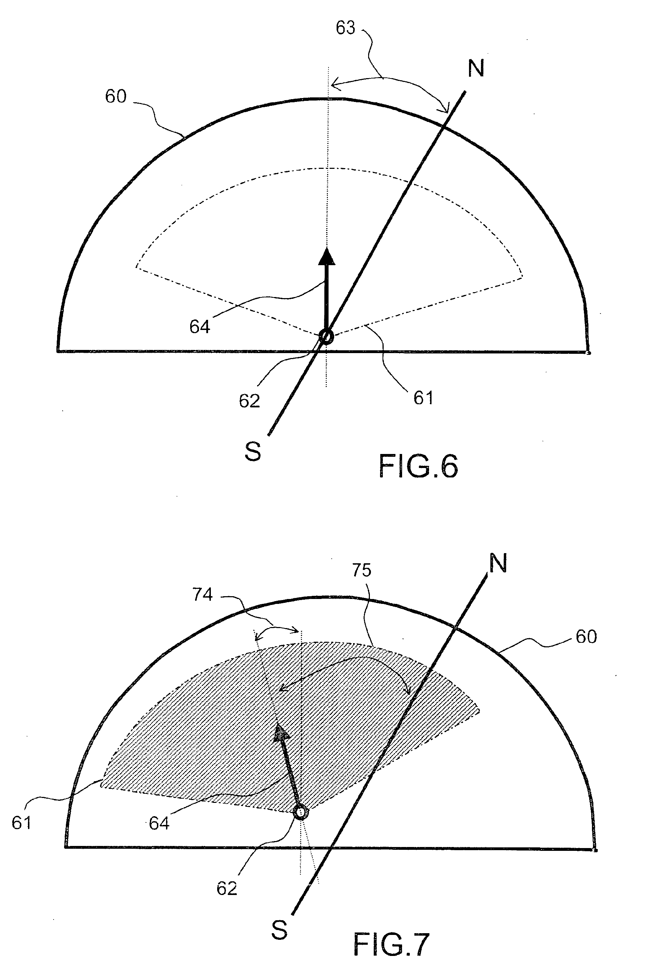

La figure 6 illustre un moyen simple d'asservissement de la représentation des données graphiques du TAWS en fonction de la position courante de l'aéronef et de son cap en un cycle C₀. Cet asservissement de la représentation des données graphiques de l'application TAWS est indépendant de l'asservissement du calcul des données de cette même application.

On considère un espace 60 correspondant à l'ensemble des données du TAWS qui sont calculées en un cycle C₁ équivalent à 100 cycles C₀. Ces données peuvent être potentiellement représentées graphiquement sous forme de radiales mais ne constituent dans cet exemple qu'une représentation des données calculées et non affichées. On considère un sous-ensemble 11 de ces données qui seront réellement affichées au pilote sur un afficheur. Le cap de l'aéronef 64 est représenté par un vecteur. Ce cap est géo-référencée par rapport à l'axe Nord-Sud par un angle 63.

Le dispositif selon l'invention permet, pendant un cycle C₀, d'une part :
- de rafraîchir à l'écran l'ensemble des données calculées correspondants à l'espace 61, prélevées symétriquement par rapport au dernier cap calculé de l'aéronef ;
- de les afficher, le cycle suivant, symétriquement de part et d'autre du nouveau cap calculé et ayant comme origine la nouvelle position de l'aéronef.

La figure 7 représente le nouveau cap 64 et la nouvelle position 62 de l'aéronef, calculés le cycle suivant et les données 61 qui sont affichées le cycle suivant. Le nouveau cap fait un angle 74 avec le cap calculé le cycle précédent.

Le pilote visualise la représentation des données du TAWS centrées autour du cap 64, le cap de l'aéronef lui étant toujours représenté verticalement, dirigé vers le haut.

Le dispositif selon l'invention permet par le biais des ressources graphiques de l'application TAWS, d'effectuer une rotation et une translation des données prélevées à chaque cycle C₀.

La rotation est déterminée par l'angle formé par les deux derniers caps de l'aéronef calculés. La translation est obtenue par comparaison des deux dernières positions, chacune géo-référencée, de l'aéronef.

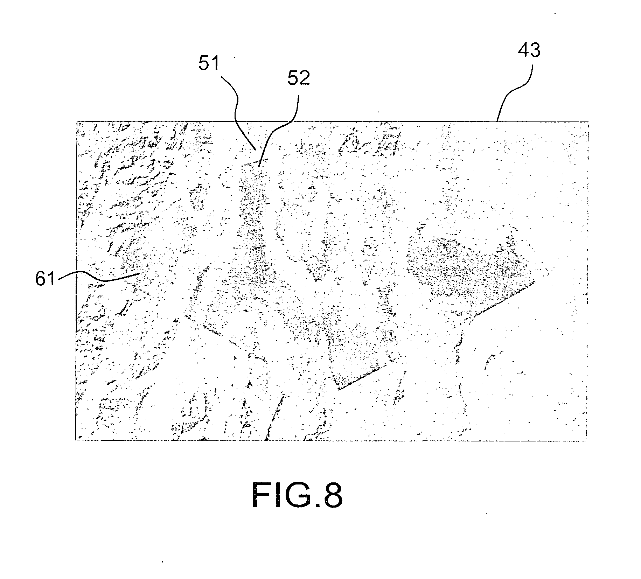

On obtient, après le calcul de la translation et de la rotation par des moyens de calculs embarqués, dans un cycle C₀, la représentation de la figure 8. Sur cette figure, les données cartographiques, calculées et affichées en un cycle C₀, sont représentées, ainsi que les données 61 issues de l'application TAWS. On constate que les zones 51 et 52 se superposent.

Il est préférable de considérer un sous-ensemble 61 nécessairement plus petits que l'ensemble des données 60 issues de l'application TAWS. La Marge entre les deux ensembles de données 60 et 61 représente une latitude suffisamment grande du déplacement de l'aéronef afin que l'application TAWS dispose toujours, sur un cycle C₁, des données à extraire pour que celles-ci soient représentées sur l'afficheur.

Le cas aux limites est celui, par exemple, d'un virage effectué dans un temps suffisamment court par l'aéronef, de manière à ce qu'avant la fin du cycle C₁, celui-ci comprenant 100 cycles C₀, le sous ensemble 61 sortes de l'espace des données connues 60. Les données 60 sont calculées dans leur intégralité en un cycle C₁.

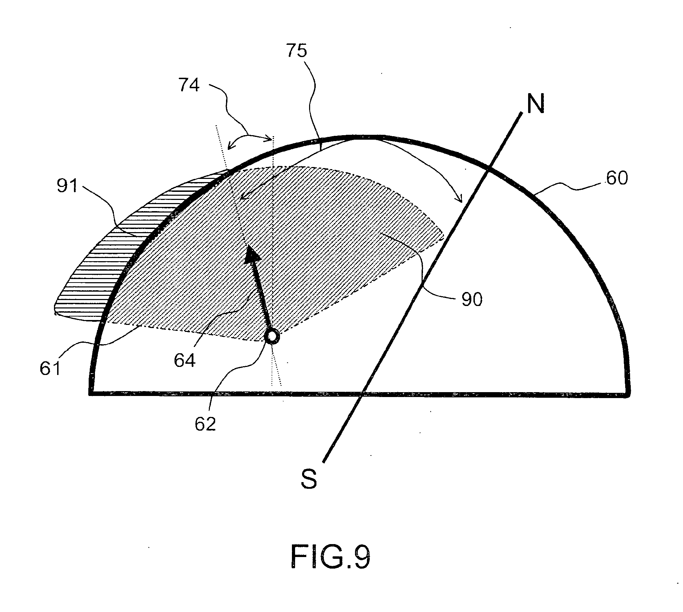

La figure 9 représente un cas critique où l'aéronef aurait effectué un changement de cap suffisamment important de manière à ce que l'ensemble des données 61 extraites pour être rafraîchies sur l'afficheur ne soit pas complet. L'espace 91 ne peut être représenté sur l'afficheur car les données correspondantes n'existent pas. Les 100 cycles nécessaires pour calculer les nouvelles données suivant le nouveau cap et la nouvelle position de l'aéronef n'a pas été atteint. Les ressources graphiques ne disposent que du sous-ensemble de données 90.

Cette représentation, illustrée figure 9, engendrerait un inconfort visuel pour le pilote sur la représentation géométrique des données qui lui seraient présentées. Elle ne doit donc pas être permise. La marge entre l'ensemble de données 60, calculées sur 100 cycles C₀, et le sous-ensemble de données affichées 61, à chaque cycle C₀, doit être suffisante. Cette marge est calculée pour qu'aucun changement de cap réaliste de l'aéronef ne permette aux ressources graphiques d'afficher un ensemble de données comportant un sous-ensemble vide.

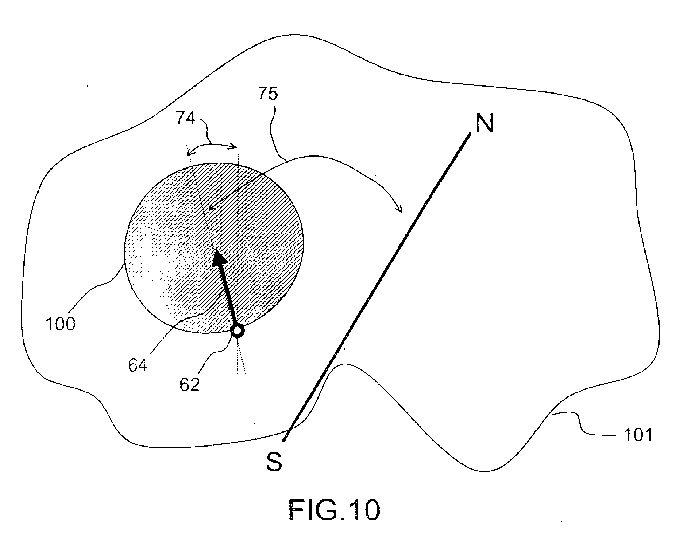

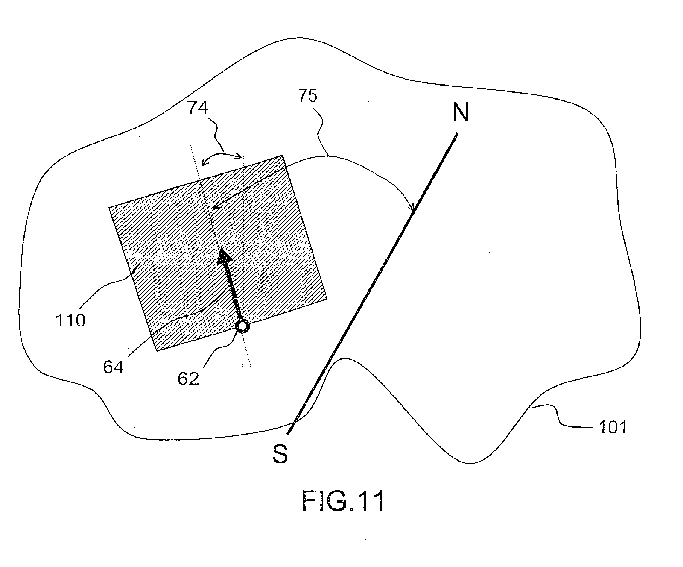

Dans d'autres cas de réalisations les figures 10 et 11 représentent un dispositif selon l'invention, comportant un ensemble de données 101 calculées dans un cycle C₁ qui n'est pas spécifiquement organisé en radiales. Le dispositif consiste à asservir un sous-ensemble de données 100 ou 110 de l'ensemble 101, en fonction du cap et de la position de l'aéronef de manière à les orienter à chaque cycle C₀ sur un écran de visualisation de l'aéronef. Ce sous-ensemble possède avantageusement une forme géométrique remarquable, de type cercle, losange, triangle ou rectangle, pour que les calculs soient moins complexes.

Indifféremment, dans un autre cas de réalisation l'application concernée peut partager ses ressources graphiques avec une autre application ou avec la ressource graphique principale du calculateur avionique.

## Revendications

1. Dispositif d'asservissement de représentations graphiques de l'environnement aérien pour aéronef, encore appelé situation awareness en terminologie anglo-saxonne, ledit dispositif comprenant des moyens de visualisation, un calculateur avionique, et
• d'une part ;
○ une première ressource de traitement et de stockage de données, lesdites données étant appelées données environnementales ;
○ des premiers moyens de génération d'images des données environnementales, lesdites données étant asservies par la première ressource de calcul et rafraîchie, périodiquement, dans, au moins, un premier intervalle de temps (t1) et ;
• d'autre part ;
○ une deuxième ressource de calcul fournissant un angle de cap de l'aéronef par rapport au nord et sa position courante géo-référencée, ces données étant asservies, périodiquement, en temps réel dans un deuxième intervalle de temps (t2), tel que le second intervalle de temps (t2) soit inférieur au premier intervalle de temps (t1),
**caractérisé en ce que** la représentation d'une partie des données environnementales sur l'écran de visualisation, soit asservie et rafraîchie dans le second intervalle de temps (t2) et positionnée et orientée graphiquement, par les moyens de visualisation, selon le dernier angle courant de la position de l'aéronef calculé et de la dernière position courante géo-référencée.

2. Dispositif selon la revendication 1, **caractérisé en ce que** le dispositif comprend un ensemble de bases numériques de données représentant des informations topologiques de terrain, appelées données cartographiques, ces données étant asservies par le calculateur à des seconds moyens de génération d'images et rafraîchies, orientées et positionnées sur l'écran de visualisation dans le second intervalle de temps (t2) selon le cap et la position de l'aéronef, de telle manière que les données environnementales soient superposées aux données cartographiques.

3. Dispositif selon l'une quelconque des revendications 1 ou 2, **caractérisé en ce que** la partie des données environnementales affichées sur l'écran de visualisation est représentée symétriquement de part et d'autre du cap de l'aéronef et a pour origine la position courante de l'aéronef.

4. Dispositif selon la revendication 3, **caractérisé en ce que** les données environnementales calculées couvrent une première zone géographique et les données environnementales affichées couvrent une seconde zone géographique incluse dans la première zone, la surface de la seconde zone étant suffisamment petite de façon à ce que pendant le premier intervalle de temps (t1), compte tenu des performances maximales de déplacements de l'aéronef, la seconde zone reste toujours incluse dans la première zone.

5. Dispositif selon l'une quelconque des revendications 1 ou 2, **caractérisé en ce que** les données environnementales sont des données météorologiques, tel que les données provenant du système WXR, dont la terminologie anglo-saxonne est « Weather Radar System ».

6. Dispositif selon l'une quelconque des revendications 1 ou 2, **caractérisé en ce que** les données environnementales sont des données d'altimétrie, tel que les données provenant du système TAWS, dont la terminologie anglo-saxonne est « Terrain Awareness Warning System ».

7. Dispositif selon l'une quelconque des revendications 1, 2, 3 ou 4, **caractérisé en ce que** les données environnementales numérisent un secteur angulaire (θ₀) symétrique de part et d'autre du cap de l'aéronef, ledit secteur angulaire ayant une portée constante (L) et point d'origine définie par la position courante de l'aéronef.

8. Dispositif selon la revendication 7, **caractérisé en ce que** le secteur angulaire est composé d'un nombre de radiales (Nr), ayant chacune une portée (L), une ouverture (θ₁), de centre la position courante de l'aéronef, l'espacement entre deux radiales étant défini par l'angle (θ₁/2).

9. Dispositif selon la revendication 8, **caractérisé en ce que** les radiales sont calculées par le calculateur, successivement par groupe de quatre, dans le second intervalle de temps (t2), l'ensemble des radiales, formant le secteur angulaire, étant calculé dans le premier intervalle de temps (t1).

10. Dispositif selon l'une quelconque des revendications 1, 2, 3 et 4, **caractérisé en ce que** les données environnementales sont transmises selon le protocole ARINC 453, aux moyens de générations d'images.

11. Dispositif selon la revendication 9, **caractérisé en ce que** le premier intervalle de temps (t1) est égal 2,5 s et le second intervalle de temps (t2) est égal à 25ms.

## Claims

1. A device for controlling graphical representations of the aerial environment of aircraft, still referred to by the English term "situation awareness", said device including display means, an avionics computer, and,
• son the one hand;
- a first resource for processing and storing data, said data being referred to as environmental data;
- first means for generating images of the environmental data, said data being controlled by the first computation resource and being periodically refreshed in at least one first time interval (t1) and;
• on the other hand;
- a second computation resource providing a heading angle of the aircraft relative to North and its current geo-referenced position, this data being periodically controlled in real-time in a second time interval (t2), such that the second time interval (t2) is shorter than the first time interval (t1),
**characterised in that** the representation of part of the environmental data on the display screen is controlled and refreshed in a second time interval (t2) and graphically positioned and oriented by the display means at the last calculated current angle of the position of the aircraft and the last geo-referenced current position.

2. The device according to claim 1, **characterised in that** the device comprises a set of digital databases representing topological information of the terrain, referred to as cartographic data, the data being connected by the computer to second means for generating images and refreshed, oriented and positioned on the display screen in the second time interval (t2) according to the heading and the position of the aircraft, so that the environmental data is superposed on the cartographic data.

3. The device according to claim 1 or 2, **characterised in that** the part of the environmental data displayed on the display screen is represented symmetrically on both sides of the heading of the aircraft and has its point of origin in the current position of the aircraft.

4. The device according to claim 3, **characterised in that** the calculated environmental data covers a first geographical zone and the environmental data which is displayed covers a second geographical zone included in the first zone, the surface of the second zone being sufficiently small so that during the first time interval (t1), taking into account the maximum displacement performances of the aircraft, the second zone stays within the first zone.

5. The device according to claim 1 or 2, **characterised in that** the environmental data is meteorological data, such as the data originating from a WXR system, which English term is "Weather Radar System".

6. The device according to claim 1 or 2, **characterised in that** the environmental data is altimetric data, such as the data originating from a TAWS system, which English term is "Terrain Awareness Warning System".

7. The device according to any one of claims 1, 2, 3 or 4, **characterised in that** the environmental data digitises a symmetrical angular sector (θ₀) on both sides of the heading of the aircraft, said angular sector having a constant range (L) and a point of origin defined by the current position of the aircraft.

8. The device according to claim 7, **characterised in that** the angular sector is composed of a number of radial lines (Nr), each having a range (L) and an opening angle (θ₁), the centre of which is the current position of the aircraft, the gap between two radial lines being defined by the angle (θ₁/2).

9. The device according to claim 8, **characterised in that** the radial lines are calculated by the computer, successively in groups of four, in the second time interval (t2), all of the radial lines forming the angular sector being calculated in the first time interval (t1).

10. The device according to any one of claims 1, 2, 3 and 4, **characterised in that** the environmental data is transmitted according to the ARINC 453 protocol to the image generating means.

11. The device according to claim 9, **characterised in that** the first time interval (t1) equals 2.5 s and the second time interval (t2) equals 25ms.

## Patentansprüche

1. Vorrichtung zur Steuerung grafischer Darstellungen der Luftumgebung von Luftfahrzeugen, auch mit dem englischen Begriff "situation awareness" bezeichnet, wobei die Vorrichtung Anzeigemittel, einen Avionik-Computer und Folgendes umfasst:
• einerseits
- eine erste Ressource zum Verarbeiten und Speichern von Daten, wobei diese Daten als Umgebungsdaten bezeichnet werden:
- erste Mittel zum Erzeugen von Bildern der Umgebungsdaten, wobei diese Daten von der ersten Rechenressource gesteuert und in wenigstens einem ersten Zeitintervall (t1) periodisch aufgefrischt werden; und
• andererseits
- eine zweite Rechenressource, die einen Kurswinkel des Luftfahrzeugs in Bezug auf Norden und seine laufende Position georeferenziert angibt, wobei diese Daten periodisch in Echtzeit in einem zweiten Zeitintervall (t2) gesteuert werden, so dass das zweite Zeitintervall (t2) kürzer ist als das erste Zeitintervall (t1),
**dadurch gekennzeichnet, dass** die Darstellung eines Teils der Umgebungsdaten auf dem Anzeigeschirm in einem zweiten Zeitintervall (t2) gesteuert und aufgefrischt und von dem Anzeigemittel grafisch gemäß dem letzten berechneten laufenden Winkel der Position des Luftfahrzeugs und der letzten georeferenzierten laufenden Position positioniert und orientiert wird.

2. Vorrichtung nach Anspruch 1, **dadurch gekennzeichnet, dass** die Vorrichtung einen Satz digitale Datenbanken beinhaltet, die topologische Informationen über das Gelänge repräsentieren, kartografische Daten genannt, wobei die Daten von dem Computer mit zweiten Mitteln zum Erzeugen von Bildern verbunden werden und auf dem Anzeigeschirm in dem zweiten Zeitintervall (t2) gemäß dem Kurs und der Position des Luftfahrzeugs aufgefrischt, orientiert und so positioniert werden, dass die Umgebungsdaten auf den kartografischen Daten überlagert sind.

3. Vorrichtung nach Anspruch 1 oder 2, **dadurch gekennzeichnet, dass** der auf dem Anzeigeschirm angezeigte Teil der Umgebungsdaten symmetrisch auf beiden Seiten des Kurses des Luftfahrzeugs dargestellt wird und die laufende Position des Luftfahrzeugs als Ursprung hat.

4. Vorrichtung nach Anspruch 3, **dadurch gekennzeichnet, dass** die berechneten Umgebungsdaten eine erste geografische Zone abdecken und die angezeigten Urngebungsdatcn eine zweite geografische Zone abdecken, die in der ersten Zone enthalten ist, wobei die Fläche der zweiten Zone klein genug ist, so dass während des ersten Zeitintervalls (t1), unter Berücksichtigung der maximalen Bewegungsleistung des Luftfahrzeugs, die zweite Zone immer innerhalb der ersten Zone bleibt.

5. Vorrichtung nach Anspruch 1 oder 2, **dadurch gekennzeichnet, dass** die Umgebungsdaten meteorologische Daten sind, wie z.B. die vom WXR-System (auf Englisch "Weather Radar System") kommenden Daten.

6. Vorrichtung nach Anspruch 1 oder 2, **dadurch gekennzeichnet, dass** die Umgebungsdaten altimetrische Daten sind, wie z.B. die vom TAWS-System (auf Englisch "Terrain Awareness Warning System") kommenden Daten.

7. Vorrichtung nach Anspruch 1, 2, 3 oder 4, **dadurch gekennzeichnet, dass** die Umgebungsdaten einen symmetrischen Winkelsektor (θ₀) auf beiden Seiten des Kurses des Luftfahrzeugs digitalisieren, wobei der Winkelsektor eine konstante Reichweite (L) und einen Ausgangspunkt hat, der von der laufenden Position des Luftfahrzeugs definiert wird.

8. Vorrichtung nach Anspruch 7, **dadurch gekennzeichnet, dass** der Winkelsektor aus einer Reihe von Radiallinien (Nr), jeweils mit einer Reichweite (L) und einem Öffnungswinkel (θ₁), zusammengesetzt ist, deren Mittelpunkt die laufende Position des Luftfahrzeugs ist, wobei die Lücke zwischen zwei Radiallinien durch den Winkel (θ₁/2) definiert wird.

9. Vorrichtung nach Anspruch 8, **dadurch gekennzeichnet, dass** die Radiallinien von dem Computer, nacheinander in Vierergruppen, in dem zweiten Zeitintervall (t2) berechnet werden, wobei die Gesamtheit der den Winkelsektor bildenden Radiallinien in dem ersten Zeitintervall (t1) berechnet werden.

10. Vorrichtung nach einem der Ansprüche 1, 2, 3 und 4, **dadurch gekennzeichnet, dass** die Umgebungsdaten gemäß dem ARINC 453 Protokoll zu den Bilderzeugungsmitteln übertragen werden.

11. Vorrichtung nach Anspruch 9, **dadurch gekenntzeichnet, dass** das erste Zeitintervall (t1) 2,5 s beträgt und das zweite Zeitintervall (t2) 25 ms beträgt.
